# FASCICULE DE BREVET EUROPEEN

(11) **EP 2 515 096 B1**
(45) Date de publication et mention de la délivrance du brevet: **28.08.2013**
(21) Numéro de dépôt: 12163300.2
(22) Date de dépôt: 05.04.2012
(51) Int. Cl.: G01N 21/17, G01N 29/24

(54) **Détecteur de gaz photoacoustique à cellule de Helmholtz**
Fotoakustischer Gasdetektor mit Helmholtzelle
Photoacoustic gas detector with Helmholtz cell

(30) Priorité: 21.04.2011 FR 1153471
(43) Date de publication de la demande: 24.10.2012
(60) Demande divisionnaire: 13175136.4
(73) Titulaire: COMMISSARIAT A L'ENERGIE ATOMIQUE ET AUX ENERGIES ALTERNATIVES, 75015 Paris (FR); Université De Reims Champagne-Ardenne, 51097 Reims (FR); Centre National de la Recherche Scientifique, 75794 Paris Cedex 16 (FR)
(72) Inventeur: Brun, Mickael, 38320 EYBENS (FR); Nicoletti, Sergio, 38650 SINARD (FR); Parvitte, Bertrand, 51097 REIMS (FR); Zeninari, Virginie, 51097 REIMS (FR)
(74) Mandataire: de Beaumont, Michel

(56) Documents cités:
- DE-B3-102009 029 002
- FR-A1- 2 815 122
- FR-A1- 2 951 545
- US-A1- 2008 144 677
- US-A1- 2010 177 316
- US-B1- 7 304 732

## Description

### Domaine de l'invention

La présente invention concerne un dispositif de détection photoacoustique et plus particulièrement un détecteur de gaz de type photoacoustique à résonateur de Helmholtz.

### Exposé de l'art antérieur

US 7,304,732 B1 décrit un dispositif de détection photoacoustique comprenant une source optique discrète et une puce 204+206 incluant un ensemble de cavités 102, 104 et 110 définissant un résonateur 110 intégré et un microphone 112 intégré et une deuxième puce 202 formant un capot pour lesdites cavités 102, 104 et 110 ainsi que des contacts électriques 116.

Un dispositif de détection de gaz photoacoustique à éléments discrets utilisant un détecteur à résonateur de Helmholtz est décrit dans le brevet FR 2 815 122 dont la figure 1 est reproduite en tant que figure 1 ci-jointe.

Ce dispositif comprend une source lumineuse (laser) 1 modulée par un modulateur mécanique 2 à une fréquence acoustique. Le faisceau modulé 3 est envoyé dans un tube 40 d'une cellule résonante de Helmholtz 4 contenant un mélange gazeux à analyser. Cette cellule comprend un deuxième tube 41 parallèle au premier. Les deux tubes sont reliés par des capillaires 43 et 44. En choisissant convenablement la longueur et le diamètre des tubes et des capillaires, on réalise une cellule à une fréquence de résonance choisie. La fréquence de résonance acoustique est adaptée à la fréquence de modulation imposée par le modulateur 2 (ou inversement). Un microphone à électrets 10, 11 est associé à chacun des tubes 40, 41. Les sorties des microphones sont envoyées à un amplificateur différentiel 8. La sortie de cet amplificateur délivre des signaux électriques représentatifs de la quantité de gaz présente vers un système d'affichage 9. Le dispositif comprend également un ensemble électronique 7 permettant de contrôler le modulateur mécanique. Ainsi, quand la longueur d'onde du laser correspond à une raie d'absorption d'un gaz, on peut déterminer la présence de ce gaz et sa concentration.

Toutefois, un tel appareil de détection de gaz réalisé à partir d'éléments discrets reste limité à des applications de laboratoire. En effet :
- les matériaux utilisables avec des éléments discrets ont difficilement des longueurs d'onde de transmission supérieures à 2.5 µm alors qu'il serait souhaitable pour une analyse de gaz de fonctionner à des longueurs d'onde comprises dans un infrarouge plus lointain, dans une plage de 3 à 10 µm ;
- l'ensemble de l'appareil est sensible aux variations de température et aux vibrations qui peuvent perturber l'alignement ;
- la mise en oeuvre du système, à savoir le positionnement de ses éléments et leur alignement, doit être réalisée à l'aide de bancs optiques très précis de manipulation délicate ;
- la taille macroscopique de l'appareil empêche des applications de type "capteur" pouvant concurrencer les capteurs chimiques non sélectifs ;
- il n'est pas possible avec un tel appareil de balayer une grande plage de longueurs d'onde et il est très difficile de remplacer la source laser.

Il existe donc un besoin pour des dispositifs photo-acoustiques de détection de gaz palliant les inconvénients des appareils connus.

### Résumé

Ainsi, un objet d'un mode de réalisation de la présente invention est de prévoir un dispositif de détection photoacoustique ayant au moins certaines des caractéristiques suivantes :
- stabilité,
- insensibilité aux vibrations,
- grande précision,
- très petites dimensions,
- capacité à fonctionner à plusieurs longueurs d'onde comprises par exemple dans la plage de 3 à 10 µm,
- capacité à être facilement transporté et permettant de travailler pendant le transport.

Un mode de réalisation de la présente invention prévoit un dispositif de détection photoacoustique comprenant un circuit nanophotonique incluant une première puce sur laquelle est formé au moins un guide d'onde optique et dans laquelle est formé un ensemble de cavités définissant un résonateur de Helmholtz ; au moins une source optique apte à émettre un signal optique dans une gamme de longueur d'onde donnée et modulable à une fréquence de modulation acoustique, cette source étant solidaire de la première puce ; une deuxième puce formant un capot pour lesdites cavités et comprenant des détecteurs acoustiques ; et des circuits électroniques de traitement de la sortie des détecteurs acoustiques formés dans la première ou la deuxième puce.

Selon un mode de réalisation préféré de la présente invention, le dispositif comprend sur la première puce un ensemble de guides d'onde, chaque guide d'onde étant associé à une source optique lié à la première puce.

Selon un mode de réalisation préféré de la présente invention, ladite au moins une source optique est formée dans une troisième puce rapportée sur une partie évidée de la première puce.

Selon un mode de réalisation préféré de la présente invention, ladite au moins une source optique comprend au moins un laser type QCL.

Selon un mode de réalisation préféré de la présente invention, l'extrémité du ou des guides d'onde du côté de ladite au moins une source optique est agencée en un coupleur optique.

Un mode de réalisation de la présente invention prévoit un procédé de fabrication d'un dispositif de détection photoacoustique tel que ci-dessus comprenant les étapes suivantes :
former sur une première puce au moins un guide d'onde optique ;
rapporter sur la première puce au moins une source laser ;
déposer une couche d'encapsulation ;
creuser la couche d'encapsulation, les couches sous-jacentes et le substrat pour définir les cavités d'un résonateur de Helmholtz ;
revêtir la région où sont formées les cavités d'une deuxième puce formant un capot et comprenant des détecteurs acoustiques ;
former dans l'une des première et deuxième puces des circuits électroniques de traitement.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :

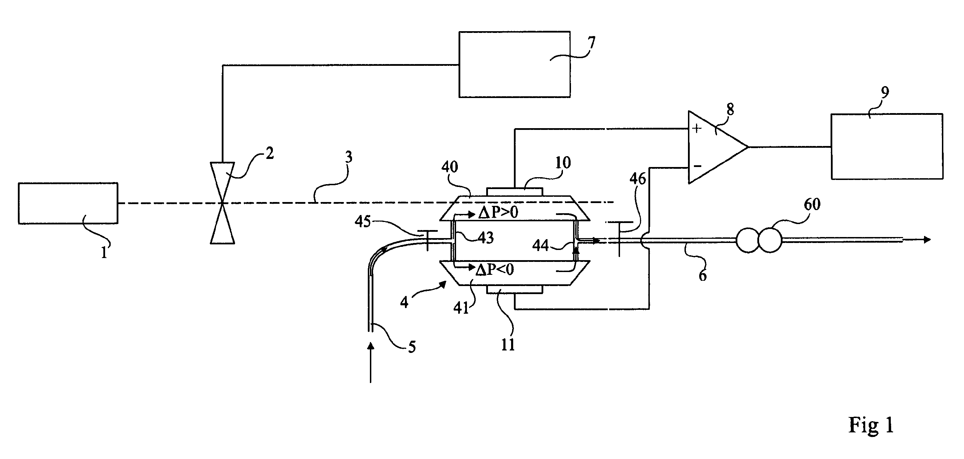

la figure 1, décrite précédemment, reprend la figure 1 du brevet FR 2 815 122 ;
la figure 2A est une vue de dessus schématique d'un dispositif de détection selon un mode de réalisation préféré de la présente invention ;
la figure 2B est une vue en coupe selon le plan BB de la figure 2A ; et
les figures 3A à 3D et 4A à 4D sont respectivement des vues en coupe et des vues de dessus du dispositif de détection des figures 2A et 2B à des étapes intermédiaires d'un exemple de procédé de fabrication de ce dispositif.

Comme cela est usuel dans la représentation des micro-composants, les diverses dimensions et notamment les épaisseurs de couche ne sont pas représentées à l'échelle. L'homme de l'art se référera à la littérature courante sur le sujet et/ou aux indications particulières données ci-après à titre d'exemple.

### Description détaillée

Un mode de réalisation préféré de la présente invention prévoit de réaliser un dispositif de détection photoacoustique sous forme monolithique. L'ensemble des composants micro-optiques, micro-électroniques et acoustiques est réalisé sur un même support en utilisant des techniques de micro et nanofabrication typiques de la microélectronique et des microsystèmes mécaniques et électriques (MEMS). Ceci assure un degré de contrôle dimensionnel, une rigidité structurelle et une robustesse qui vont bien au-delà de ce que l'on peut obtenir avec un assemblage d'éléments discrets. L'intégration des différents composants sur un même substrat rend possible de contrôler avec précision la température de l'ensemble du dispositif de détection en utilisant par exemple un refroidisseur à effet Peltier. Ceci est particulièrement important du fait que les sources lasers fonctionnant dans le moyen infrarouge, telles que des lasers dits à cascade quantique, sont généralement sensibles aux variations de température qui peuvent entraîner des décalages de longueur d'onde. En outre, réaliser sur un même support un amplificateur intégré à proximité des éléments optiques, acoustiques et électroniques permet de réduire le bruit en amplifiant des signaux faibles dans un amplificateur intégré dans le même dispositif. On obtient ainsi un gain considérable en rapport signal sur bruit. Enfin le dispositif, du fait de sa miniaturisation et de son caractère portable, est utilisable dans des circonstances où un dispositif à éléments discrets ne pourrait pas être utilisé.

Plus particulièrement, le dispositif de détection peut comprendre plusieurs sources laser intégrées qui peuvent être sélectivement activées et dirigées vers un même guide d'onde transmettant leur faisceau vers une cellule de Helmholtz intégrée. Ceci résout les problèmes d'alignement des appareils antérieurs.

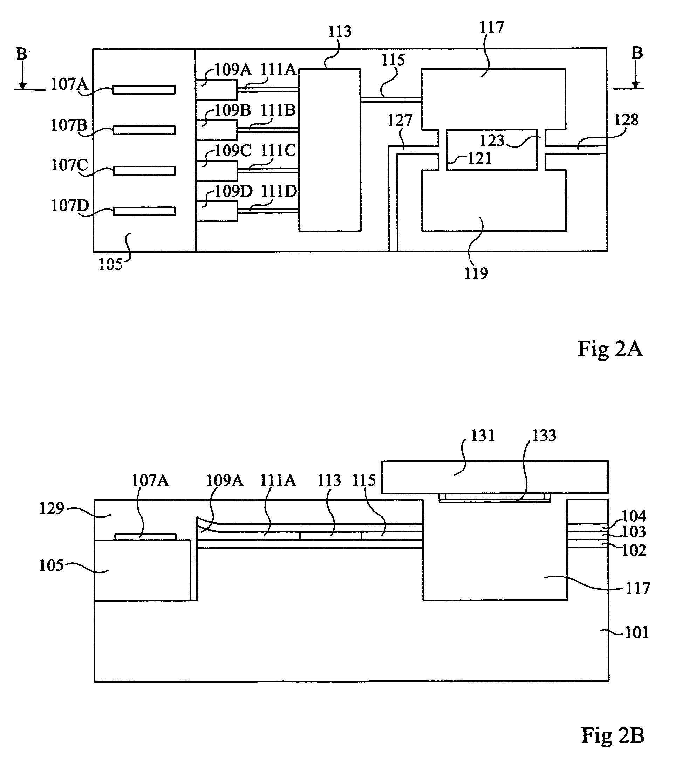

Les figures 2A à 2B sont respectivement une vue de dessus et une vue en coupe selon le plan BB de la figure 2A, illustrant un exemple de réalisation d'un microdétecteur selon un mode de réalisation préféré de la présente invention.

Ces figures sont extrêmement schématiques et sont uniquement destinées à bien faire comprendre un exemple de réalisation préféré de la présente invention.

On décrira de façon générique l'ensemble des figures 2A et 2B dans lesquelles de mêmes références désignent de mêmes éléments.

L'ensemble de la structure est réalisé sur un substrat unique 101, généralement une plaquette de silicium revêtu de trois couches 102, 103, 104 dont on donnera des exemples ci-après. Des guides d'onde sont définis dans la couche 103, les couches 102 et 104 constituant des couches de gainage. L'ensemble 102, 103, 104 peut être soit un tri couche (Si/Ge/Si ou SiN/Si/SiN), soit une couche épitaxiée de SiGe sur Si dont la proportion de Ge varie pour réaliser un gradient d'indice de profil triangulaire ou trapézoïdal recouvert d'une couche de Si (épitaxiée ou amorphe) de gainage.

Sur une partie évidée du support 101 est ramené un élément 105 sur lequel sont réalisés des lasers à semiconducteurs, de préférence de type QCL (Quantum Cascade Laser ou laser à cascade quantique). A titre d'exemple cet assemblage pourra se faire selon des techniques dites d'hybridation hétérogène couramment utilisées dans les technologies de micro et nanofabrication. On a représenté 4 lasers 107A à 107D, qui sont normalement réglés à des fréquences différentes comprises de préférence entre 3 et 10 µm. En pratique, on pourra utiliser un plus grand nombre de lasers, par exemple 6 lasers fonctionnant respectivement à des longueurs d'onde de 4.0, 4.2, 4.4, 4.6, 4.8, 5.0 µm pour couvrir la plage de 4 à 5 µm. Un avantage des lasers QCL réside dans leur capacité de miniaturisation et dans leur capacité de réglage en longueur d'onde d'émission, c'est-à-dire que chacun de ces lasers peut avoir une longueur d'onde légèrement variable autour de sa longueur d'onde de consigne, cet ajustement en longueur d'onde pouvant par exemple résulter du choix de courants de polarisation.

Selon une variante de réalisation de la présente invention préféré les couches de matériaux nécessaires à la réalisation des lasers QCL sont transférées directement sur le support, par exemple par un procédé de collage moléculaire. Les lasers QCL seront alors réalisés directement sur le support final. Dans une seconde version le laser complet peut être reporté par collage basse température de type polymère.

Les lasers sont associés à des moyens non représentés d'alimentation et de modulation à une fréquence acoustique. Ces lasers émettent leur rayonnement vers des coupleurs respectifs 109A à 109D, par exemple de type coupleur conique (taper) tridimensionnel. Ces coupleurs couplent les faisceaux laser vers des guides d'onde optiques respectifs 111A à 111D connectés aux entrées d'un multiplexeur optique 113. Le multiplexeur renvoie la lumière incidente de l'un choisi des guides d'onde d'entrée 111A à 111D vers un guide d'onde de sortie 115. Le guide d'onde 115 débouche dans une première cuve 117 d'un résonateur de Helmholtz. Ce résonateur de Helmholtz comprend une deuxième cuve 119 identique à la première et reliée à celle-ci par des capillaires 121 et 123. Une entrée de gaz 127 est ménagée au milieu du capillaire 121 et une sortie de gaz 128 est ménagée au milieu du capillaire 123. Les tubes 117, 119 et les capillaires 121, et 123 correspondent à des évidements formés dans le substrat 101 et dans l'ensemble des couches qui le recouvrent. On notera, qu'au dessus de l'ensemble de la structure, avant de former les évidements, on aura de préférence formé sur l'ensemble de la structure une couche 129, par exemple du SiO₂, d'une épaisseur de l'ordre de 1 à 10 µm. Ainsi, le haut des cavités 117, 119 et 121, 123, qui ont des profondeurs respectives de l'ordre de 10 à 50 et de 1à 5 µm, se trouve nettement au-dessus du niveau auquel le guide d'onde 115 débouche dans la cavité 117.

Les cavités sont fermées par un capot 131, de préférence une puce de silicium, qui comprend des détecteurs acoustiques 133 et des moyens de connexion à ces détecteurs (non représentés).

La puce 131 ou la puce 101 comprend également des circuits électroniques intégrés propres à assurer le traitement des signaux des détecteurs.

Selon un avantage de la présente invention, l'ensemble des composants décrits ci-dessus peut être simplement réalisé à partir d'un petit nombre de couches d'un circuit intégré nanophotonique.

Plus particulièrement, les guides d'onde 111 et 115 sont formés à partir d'un même ensemble de couches qui peut être tel que décrit ci-dessus ou qui peut être différent selon les technologies de fabrication disponibles et selon le domaine de longueurs d'onde visé.

Selon un exemple de réalisation adapté à un fonctionnement dans une plage de longueurs d'onde comprise entre 3 et 10 µm où l'interaction lumière-gaz est maximale, la couche 102 est une couche de silicium, les coupleurs et les coeurs des guides d'onde optique sont formés dans une couche 103 de germanium et la couche de gainage 104 est également une couche de silicium. Etant donné que la couche de germanium et la couche de silicium de gainage sont obtenues par croissance au dessus d'une couche semiconductrice monocristalline, elles peuvent favorablement être des couches monocristallines. Ces couches peuvent également être remplacées par une couche de SiGe comportant une concentration variable de Ge le long de la direction perpendiculaire au substrat réalisant ainsi une couche à gradient d'indice dont le profil peut être triangulaire ou trapézoïdal.

Selon une autre variante de réalisation, la couche de support de chaque coeur de guide d'onde peut être une couche de nitrure de silicium, le coeur de chaque guide d'onde pourra être en silicium et la couche de gainage également en nitrure de silicium. Cette réalisation est particulièrement adaptée à un fonctionnement dans une plage de longueurs d'onde de 3 à 6 µm.

Le mode de fonctionnement du détecteur à cellule de Helmholtz ne sera pas décrit en détail, car sur le plan des principes, il est identique à celui d'un système discret, avec l'avantage de pouvoir fonctionner simultanément avec plusieurs lasers intégrés, et de pouvoir fonctionner dans une grande plage de longueurs d'onde étant donné les caractéristiques spécifiques des guides d'onde intégrés.

On comprendra que, si on utilise une structure de type SOI, on pourra réaliser dans la même structure les divers composants électroniques destinés à l'amplification des signaux et à leur analyse.

Divers modes de réalisation avec diverses variantes ont été décrits ci-dessus. L'homme de l'art pourra combiner divers éléments de ces divers modes de réalisation et variantes sans faire preuve d'activité inventive.

A titre de variante, au lieu d'être couplé au(x) guide(s) d'onde 111 par des coupleurs 109, le ou les lasers 107 pourraient être disposés au dessus de ces guides d'onde et être couplés par ondes évanescentes.

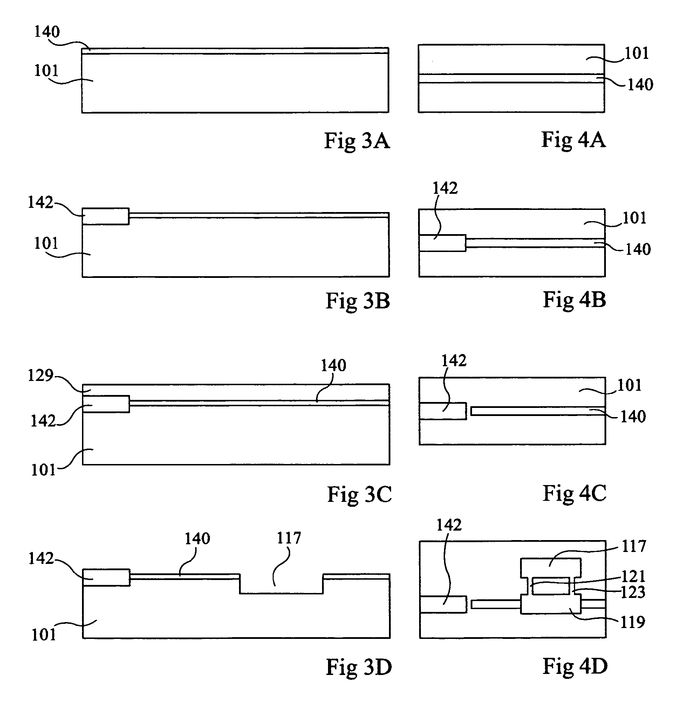

Les figures 3A à 3D et 4A à 4D sont respectivement des vues en coupe et des vues de dessus illustrant des étapes successives d'un exemple de procédé de fabrication d'un dispositif de détection selon un mode de réalisation préféré de la présente invention.

Les figures 3A et 4A représentent un substrat 101 revêtu d'un ensemble de couches 102, 103, 104 représenté sous forme d'une couche unique 140. Cette structure peut correspondre à une plaquette de silicium sur isolant (SOI) où les couches susmentionnées sont généralement une couche d'oxyde de silicium et une couche de silicium. On pourra néanmoins partir de tout substrat compatible avec une technologie de micro et nano fabrication. La première couche peut résulter du dépôt et/ou d'une croissance épitaxiale d'une couche d'un premier indice optique n_{C1}, typiquement du silicium, mais aussi par exemple MgF₂, CaF₂, SrF₂, BaF₂, PbF₂, CdF, GaAs, AlGaAs, InP, InAs, InSb, ZnS, CdTe ou Al₂O₃. La deuxième couche peut résulter de tout dépôt et/ou croissance épitaxiale d'une couche d'indice optique n_{C}>n_{Cl}, typiquement du SiGe ou du Ge mais éventuellement également MgF₂, CaF₂, SrF₂, BaF₂, PbF₂, CdF, GaAs, AlGaAs, InP, InAs, InSb, ZnS, CdTe ou Al₂O₃. On notera que la deuxième couche est notamment destinée à former le coeur d'un guide d'onde optique et n_{c} désigne l'indice de ce coeur. La première couche est notamment destinée à former la couche de gainage optique (cladding) d'un guide d'onde optique, c'est pourquoi on désigne son indice par n_{cl·}

La deuxième couche est gravée pour réaliser des composants photoniques (guide, coupleur, multiplexeur, dispositif de focalisation ou de filtrage si nécessaire). Avantageusement, ces motifs sont fabriqués par structuration d'une couche simple par photolithographie et gravure sélective. La portion correspondant aux guides d'onde est revêtue d'une deuxième couche de gainage optique d'indice n_{cl2} < n_{c}. Cette couche de gainage sera typiquement en silicium et pourra être en MgF₂, CaF₂, SrF₂, BaF₂, PbF₂, CdF, GaAs, AlGaAs, InP, InAs, InSb, ZnS, CdTe ou Al₂O₃ de façon à définir la structure du guide. Avantageusement, le matériau de la deuxième couche de gainage sera le même que celui choisi pour la première couche de gainage.

A l'étape illustrée en figures 3B et 4B, le substrat 101 est gravé pour accueillir une puce 142 contenant la ou les différentes sources lasers. La puce 142 est transférée, alignée et fixée sur le substrat 101 par un montage en surface à billes ou par collage par formation d'eutectique, par exemple une couche d'or sur le substrat et une couche de Sn sur puce et un traitement thermique pour former un alliage Au-Sn. Selon une variante, le ou les lasers peuvent être réalisés par transfert de multicouche constituant le milieu actif d'un laser QCL par collage moléculaire, le substrat ayant reçu la croissance multicouche (typiquement GaAs) est collé sur le substrat principal côté multicouche. Le GaAs est ensuite enlevé. Après cela, on met en forme la couche de la façon décrite par exemple dans la publication Applied Physics Letters 91 (2007) 231101 pour réaliser le laser QCL actif.

A l'étape illustrée en figures 3C et 4C, l'ensemble de la structure est revêtue d'une couche d'encapsulation correspondant à la couche 129 mentionnée en relation avec la figure 2B.

A l'étape illustrée en figures 3D et 4D, on creuse la couche d'encapsulation 129, les couches sous-jacentes 140 et le substrat 101 aux emplacements où l'on veut former les cavités 117, 119, 121 et 123. Ensuite, on revêt la structure du capot 131 décrit en relation avec la figure 2B pour arriver au composant intégré final.

## Revendications

1. Dispositif de détection photoacoustique comprenant un circuit nanophotonique incluant :
une première puce (101) sur laquelle est formé au moins un guide d'onde optique (111) et dans laquelle est formé un ensemble de cavités (117, 119, 121, 123) définissant un résonateur de Helmholtz ;
au moins une source optique (107) apte à émettre un signal optique dans une gamme de longueur d'onde donnée et modulable à une fréquence de modulation acoustique, cette source (107) étant solidaire de la première puce (101);
une deuxième puce (131) formant un capot pour lesdites cavités (117, 119, 121, 123) et comprenant des détecteurs acoustiques (133) ; et
des circuits électroniques de traitement de la sortie des détecteurs acoustiques (133) formés dans la première (101) ou la deuxième (131) puce.

2. dispositif selon la revendication 1, comprenant sur la première puce (101) un ensemble de guides d'onde (111A-111D), chaque guide d'onde étant associé à une source optique (107A-107D) lié à la première puce (101).

3. Dispositif selon la revendication 2, dans lequel ladite au moins une source optique (107) est formée dans une troisième puce (142) rapportée sur une partie évidée de la première puce.

4. Dispositif selon l'une quelconque des revendications 1 à 3, dans lequel ladite au moins une source optique (107) comprend au moins un laser type QCL.

5. Dispositif selon l'une quelconque des revendications 1 à 4, dans lequel l'extrémité du ou des guides d'onde (111) du côté de ladite au moins une source optique (107) est agencée en un coupleur optique (109).

6. Procédé de fabrication d'un dispositif de détection photoacoustique selon l'une quelconque des revendications 1 à 5, comprenant les étapes suivantes :
former sur une première puce (101) au moins un guide d'onde optique (111) ;
rapporter sur la première puce (101) au moins une source laser (142) ;
déposer une couche d'encapsulation (129) ;
creuser la couche d'encapsulation (129), les couches sous-jacentes et le substrat pour définir les cavités (117, 119, 121, 123) d'un résonateur de Helmholtz ;
revêtit à région où sont formées les cavités (117, 119, 121, 123) d'une deuxième puce (131) formant un capot et comprenant des détecteurs acoustiques (133);
former dans l'une des première (101) et deuxième (131) puces des circuits électroniques de traitement.

## Patentansprüche

1. Fotoakustische Detektionsvorrichtung, welche eine nanophotonische Schaltung aufweist, welche Folgendes aufweist:
einen ersten Chip (101), auf dem zumindest eine optische Wellenführung (111) geformt ist und in der ein Satz von Hohlräumen (117, 119, 121, 123) ausgebildet ist, die einen Helmholtz-Resonator definieren;
zumindest eine optische Quelle (107), welche ein optisches Signal in einem gegebenen Wellenlängenbereich emittieren kann, die in einer akustischen Modulationsfrequenz moduliert werden kann, wobei diese Quelle (107) an dem ersten Chip (101) angebracht ist;
einen zweiten Chip (131), der eine Kappe für die Hohlräume (117, 119, 121, 123) bildet und akustische Sensoren (133) aufweist; und elektronische Schaltungen zum Verarbeiten des Ausgangs der akustischen Sensoren (133), die im ersten Chip (101) oder im zweiten Chip (131) ausgeformt sind.

2. Vorrichtung nach Anspruch 1, welche auf dem ersten Chip (101) einen Satz von Wellenführung (111A-111 D) aufweist, wobei jede Wellenführung mit einer optischen Quelle (107A-107D) assoziiert ist, die mit dem ersten Chip (101) verbunden ist.

3. Vorrichtung nach Anspruch 2, wobei die mindestens eine optische Quelle (107) auf einem dritten Chip (142) geformt ist, der auf einem ausgenommenen Teil des ersten Chips angeordnet ist.

4. Vorrichtung nach Anspruch 1, wobei die mindestens eine optische Quelle (107) zumindest einen QCL-Laser aufweist.

5. Vorrichtung nach Anspruch 1, wobei das Ende der Wellenführung(en) (111) auf der Seite der mindestens einen optischen Quelle (107) als ein optischer Koppler (109) angeordnet ist.

6. Verfahren zur Herstellung der photoakustischen Detektionsvorrichtung nach Anspruch 1, welches folgende Schritte aufweist:
Formen von zumindest einer optischen Wellenführung (111) auf einem ersten Chip (101);
Anordnen von zumindest einer Laserquelle (142) auf dem ersten Chip (101);
Anordnen einer Umkapselungsschicht (129);
Aushöhlen der Umkapselungsschicht (129), der darunterliegenden Schichten und des Substrates, um die Hohlräume (117, 119, 121, 123) eines Helmholtz-Resonators zu definieren;
Beschichten der Region, wo die Hohlräume (117, 119, 121, 123) geformt sind, mit einem zweiten Chip (131), welcher eine Kappe bildet und akustische Sensoren (133) aufweist;
Formen von elektronischen Verarbeitungsschaltungen in einem der ersten und zweiten Chips (101, 131).

## Claims

1. A photoacoustic detection device comprising a nanophotonic circuit comprising:
a first chip (101) on which is formed at least one optical waveguide (111) and in which is formed a set of cavities (117, 119, 121, 123) defining a Helmholtz resonator;
at least one optical source (107) capable of emitting an optical signal in a given wavelength range, capable of being modulated at an acoustic modulation frequency, this source (107) being attached to the first chip (101);
a second chip (131) forming a cap for said cavities (117, 119, 121, 123) and comprising acoustic sensors (133); and
electronic circuits for processing the output of the acoustic sensors (133) formed in the first (101) or the second (131) chip.

2. The device of claim 1, comprising on the first chip (101) a set of waveguides (111A-111D), each waveguide being associated with an optical source (107A-107D) linked to the first chip (101).

3. The device of claim 2, wherein said at least one optical source (107) is formed in a third chip (142) placed on a recessed portion of the first chip.

4. The device of claim 1, wherein said at least one optical source (107) comprises at least one QCL-type laser.

5. The device of claim 1, wherein the end of the waveguide(s) (111) on the side of said at least one optical (107) source is arranged as an optical coupler (109).

6. A method for manufacturing the photoacoustic detection device of claim 1, comprising the steps of:
forming on a first chip (101) at least one optical waveguide (111) ;
placing on the first chip (101) at least one laser source (142);
depositing an encapsulation layer (129);
hollowing the encapsulation layer (129), the underlying layers, and the substrate to define the cavities (117, 119, 121, 123) of a Helmholtz resonator;
coating the region where the cavities (117, 119, 121, 123) are formed with a second chip (131) forming a cap and comprising acoustic sensors (133);
forming in one of the first (101) and second (131) chips electronic processing circuits.
